**Europäisches Patentamt**

**European Patent Office**

**Office européen des brevets**

(19)

(11) **EP 1 384 976 A1**

(12) **EUROPÄISCHE PATENTANMELDUNG**

(43) Veröffentlichungstag:
   **28.01.2004 Patentblatt 2004/05**

(51) Int Cl.$^7$: **G01D 5/20**

(21) Anmeldenummer: **03011705.5**

(22) Anmeldetag: **23.05.2003**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK**<br><br>(30) Priorität: **03.07.2002 DE 10229760** | (71) Anmelder: **DaimlerChrysler AG**<br>**70567 Stuttgart (DE)**<br><br>(72) Erfinder:<br>• **Hofmann, Rainer**<br>  **70374 Stuttgart (DE)**<br>• **Kirschbaum, Markus**<br>  **75177 Pforzheim (DE)** |

(54) **Positionsermittlungsverfahren für einen induktiven Positionssensor**

(57)   Positionsermittlungsverfahren für einen induktiven Positionssensor mit einer Spule und einem in dieser Spule verschiebbaren Kern. Zur Ermittlung der Position eines Bauteils wird die Position des mit dem Bauteil mechanisch gekoppelten und innerhalb der Spule verschiebbaren Kerns ermittelt. Hierzu wird an die Spule in einem Ausgangszeitpunkt $t_0$ eine Spannung $U_1$ angelegt, und eine Zeitdauer $t_2 - t_1$ erfasst, innerhalb derer sich der Strom durch die Spule von einer ersten Stromstärke $I_1$ auf eine zweite Stromstärke $I_2$ ändert. Die erfasste Zeitdauer $t_2 - t_1$ und die Stromstärken $I_1$ und $I_2$ werden Ermittlung der Position des verschiebbaren Kerns herangezogen, wobei $t_2 > t_1 \geq t_0$ ist.

An die Spule wird in einem Zeitpunkt $t_3$ eine Spannung $U_2 \neq U_1$ angelegt, und es wird die Zeitdauer $t_5 - t_4$ erfasst, innerhalb derer sich der Strom durch die Spule von einer dritten Stromstärke $I_3$ auf eine vierte Stromstärke $I_4$ ändert. Die erfasste Zeitdauer $t_5 - t_4$ und die Stromstärken $I_3$ und $I_4$ werden zusätzlich zur Ermittlung der Position des verschiebbaren Kerns herangezogen. Hierbei gilt $t_5 > t_4 \geq t_3 \geq t_2$.

Fig. 2

EP 1 384 976 A1

**Beschreibung**

Die Erfindung betrifft ein Positionsermittlungsverfahren für einen induktiven Positionssensor mit einer Spule und einem in dieser Spule verschiebbaren Kern.

Um eine Position eines Gegenstandes zu ermitteln werden unter anderem induktive Weg- oder Positionssensoren eingesetzt. Hierbei ist der Gegenstand, dessen Position ermittelt werden soll, entweder mit einem durch die Spulenmitte verschiebbaren Kern verbunden, oder der verschiebbare Kern ist Teil dieses Gegenstandes. Die Induktivität der Spule hängt von der Position des Kerns in der Spulenmitte ab. Deshalb wird bei der Positionsermittlung mittels eines induktiven Sensors üblicherweise die Induktivität der Spule ermittelt.

Ein induktiver Sensor zur Wegmessung ist beispielsweise aus der DE 3343885 C2 bekannt. Bei diesem Sensor wird die Spule von einem Mikrokontroller gesteuert mit einem Spannungsstoß angeregt. Aus dem auf den Spannungsstoß resultierenden Strom wird auf die Induktivität der Spule, und aus dieser auf die Position eines durch die Spulenmitte verschiebbaren Kerns geschlossen.

Ein anderer induktiver Positionssensor und ein Verfahren zur Positionsbestimmung mittels dieses Sensors sind aus der gattungsbildenden WO 0071977 A1 bekannt. Bei dem Verfahren zur Positionsermittlung für einen induktiven Positionssensor mit einer Spule und einem in dieser Spule verschiebbaren Kern, wird die Position des verschiebbaren Kerns dadurch ermittelt, dass an die Spule eine Spannung angelegt wird. Dann wird die Zeitdauer erfasst, innerhalb derer der Strom durch die Spule von einer ersten vorgebbaren Stromstärke auf eine zweite vorgebbare Stromstärke ansteigt. Die erfasste Zeitdauer und die vorgebbaren Stromstärken werden zur Ermittlung der Position des verschiebbaren Kerns herangezogen. Ein solches Verfahren hat den Nachteil, dass zur Positionsermittlung der Serienwiderstand der Spule und der Spulenzuleitungen herangezogen werden muss. Um den Einfluss des temperaturabhängigen Serienwiderstandes gering zu halten, wird der Strom I nur in einem kleinen Bereich um I=0V gesteuert. In diesem Bereich ist die Strom-Spannungskurve durch die Spule näherungsweise linear und nur gering abhängig vom Serienwiderstand, falls die Spannung an der Spule symmetrisch um U=0V vorgegeben wird.

Bei einer Induktivitätsmessung, welche ausschließlich bei sehr kleinen Strömen durch die Spule erfolgt und bei welchen der Serienwiderstand näherungsweise vernachlässigt werden kann, ist jedoch die Messgenauigkeit eingeschränkt.

Aufgabe der Erfindung ist es, ein einfach durchführbares Verfahren zur Positionsermittlung mittels eines induktiven Positionssensors anzugeben, welches genau, schnell, zuverlässig und in hohem Umfang tolerant gegenüber großen und schnellen Schwankungen des Serienwiderstandes ist.

Diese Aufgabe wird gelöst durch die Merkmale des unabhängigen Patentanspruchs 1.

Das erfindungsgemäße Positionsermittlungsverfahren ist durchführbar mit einem induktiven Positionssensor mit einer Spule und einem in dieser Spule verschiebbaren Kern. Es soll gelten $t_5 > t_4 \geq t_3 \geq t_2 > t_1 \geq t_0$. Die Position des verschiebbaren Kerns wird dadurch ermittelt, dass an die Spule im Ausgangszeitpunkt $t_0$ eine Spannung $U_1$ angelegt wird. Die Zeitdauer $t_2 - t_1$, innerhalb derer der sich Strom durch die Spule von einer ersten Stromstärke $I_1$ auf eine zweite Stromstärke $I_2$ ändert, wird erfasst. In einem Zeitpunkt $t_3$ wird an die Spule eine Spannung $U_2 \neq U_1$ angelegt, und es wird die Zeitdauer $t_5 - t_4$ erfasst, innerhalb derer sich der Strom durch die Spule von einer dritten Stromstärke $I_3$ auf eine vierte Stromstärke $I_4$ ändert. Insbesondere weisen die beiden Spannungen $U_1$ und $U_2$ unterschiedliche Vorzeichen. Die erfassten Zeitdauern $t_2 - t_1$ und $t_5 - t_4$, sowie die Stromstärken $I_1$, $I_2$, $I_3$, $I_4$ werden zur Ermittlung der Position des verschiebbaren Kerns herangezogen. Insbesondere wird aus den erfassten Zeitdauern und den Stromstärken die Induktivität der Spule ermittelt. Der ermittelten Induktivität L der Spule wird dann eine Position des verschiebbaren Kerns zugeordnet. Die Zuordnung kann mittels eines funktionalen Zusammenhangs oder einer Tabelle durchgeführt werden, wozu der Zusammenhang zwischen Spuleninduktivität und Kernposition vorgegeben wird. Die Stromstärken $I_1$, $I_2$, $I_3$, $I_4$ können beliebig vorgegeben werden, insbesondere können sie unterschiedliche Vorzeichen und/oder unterschiedliche Beträge aufweisen.

Der Zusammenhang zwischen der Induktivität der Spule und den Zeitdauern $t_1$ bis $t_5$ und den Stromstärken $I_1$ bis $I_4$ ist mittels zweier Gleichungen beschreibbar. Die erste Gleichung beschreibt die Änderung der Stromstärke während der Zeitdauer $t_2 - t_1$. Eine zweite Gleichung beschreibt die Änderung der Stromstärke während der Zeitdauer $t_5 - t_4$. Beide Gleichungen enthalten, zusätzlich zu den erfassten Zeitdauern und Stromstärken, als die verbleibenden Unbekannten die Induktivität L der Spule und den Serienwiderstand R des Spulenschaltkreises, umfassend die Spule und deren Zuleitungen. Mittels den beiden Gleichungen und den erfassten Zeitdauern und Stromstärken können die beiden Unbekannten L und R ermittelt werden. Dies hat den Vorteil, dass für die gewünschte Ermittlung der Induktivität L und der Serienwiderstand R nicht gesondert ermittelt werden müssen und die Messung nicht in einem Messbereich erfolgen muss, in dem der Serienwiderstand noch vernachlässigt werden könnte. Somit ist eine höhere Genauigkeit der Induktivitätsermittlung möglich.

Da der Serienwiderstand R beispielsweise von Veränderungen in den Zuleitungen, beispielsweise kurzzeitigen Widerstandsschwankungen in Steckverbindern abhängt, ist es besonders vorteilhaft, dass die Messung sehr schnell durchführbar ist. Bei einer für den Einsatz in Kraftfahrzeugen geeigneten Auslegung der Spule und der Zuleitungen, ist ein Messzyklus zur Bestimmung der Induktivität L, je nach gewünschter Genauigkeit, innerhalb ungefähr 0,5 - 5 ms durchführbar. Somit ist die Wahrscheinlichkeit, dass im Messintervall eine wesentliche Widerstandsänderung auftritt, gering und kann mittels einer schnellen Messfolge und häufigen Messungen zudem erkannt werden.

Es ist vorteilhaft, mit geringem zusätzlichem Rechenaufwand gleichzeitig mit der Induktivität L den Serienwiderstand R zu ermitteln. Mittels des ermittelten Serienwiderstands R kann der Spulenschaltkreis auf Fehler überprüft werden. Insbesondere kann der ermittelte Serienwiderstand mit einem vorgebbaren Erwartungswert und/oder einem auf andere Weise ermittelten Widerstandswert verglichen werden.

In einer vorteilhaften Ausgestaltung des erfindungsgemäßen Positionsermittlungsverfahrens beträgt die Spannung $U_0$, welche im Ausgangszeitpunkt $t_0 - 0$ an der Spule anliegt, gleich $U_0 = 0$ V und der Strom beträgt $I_0 = 0$ A. Hierdurch wird die Auswertung der erfassten Größen zur Ermittlung der Position des verschiebbaren Kerns besonders leicht. Im Zeitpunkt $t_0$ steigt die Spannung sprunghaft an, und zum Zeitpunkt $t_0 + 0$ liegt an der Spule eine Spannung $U_1 \neq 0$ V an, wodurch der Betrag des Stroms ansteigt.

Es ist vorteilhaft, die Ströme $I_1$, $I_2$, $I_3$ und $I_4$ so vorzugeben, dass ein Stromanstieg von $I_1$ auf $I_2$ und ein Stromabfall von $I_3$ auf $I_4$ stattfinden. Dies hat den Vorteil, dass der notwendige Stromabfall, welcher nach dem Stromanstieg zur ersten Messwerterfassung sowieso stattfinden muss, zur zweiten Messwerterfassung genutzt wird. Als einfacher Sonderfall werden $I_1 = I_4$ und/oder $I_2 = I_3$ gewählt.

In einer weiteren Ausgestaltung des Positionsermittlungsverfahrens betragen die Stromstärke $I_1$ und/oder die Stromstärke $I_4$, zumindest näherungsweise, gleich 0 A. Diese Ausgestaltungen ermöglichen eine erleichterte Auswertung der erfassten Größen, und somit eine erleichterte und einfache Ermittlung der Position des Spulenkerns.

In einer Weiterbildung des Verfahrens werden die Stromstärken $I_1$ bis $I_4$ so klein gewählt, dass der Anstieg und der Abfall der Stromstärke in den Zeiträumen zwischen $t_1$ und $t_2$ und zwischen $t_4$ und $t_5$ näherungsweise linear sind. Bei sehr kleinen Stromstärken ist der Stromverlauf nur von der Induktivität und nur sehr gering vom Serienwiderstand anhängig.

Das erfindungsgemäße Positionsermittlungsverfahren kann vorteilhaft dahingehend ergänzt werden, dass in vorgebbaren Abständen eine Messung des Serienwiderstands auf herkömmliche Weise erfolgt. Es wird ein in vorgebbaren Abständen durchführbarer Zwischenschritt vorgesehen, bei welchem $t_z \gg t_2$ sehr groß vorgegeben wird, so dass zum Zeitpunkt $t_z$ die Stromstärke $I_z$ näherungsweise der Sättigungsstromstärke $I_\infty = I(U_0, t=\infty)$ ist. Das heißt, die Induktivität der Spule ist für den Strom durch dieselbe vernachlässigbar. Es ist eine stationäre Stromstärke erreicht, welche durch den Serienwiderstand bestimmt ist. Aus dem Quotient der Spulenspannung $U_0$ und der Strömstärke $I_z$ wird der Serienwiderstand des Systems, bestehend aus Spule und Zuleitungen ermittelt. Der ermittelte Serienwiderstand kann zur Ermittlung der Position des verschiebbaren Kerns, oder zur Überprüfung des - entsprechend dem weiter vorne angegebenen Verfahren - ermittelten Serienwiderstandes herangezogen werden. Aus dem Vergleich der auf zwei verschiedene Arten ermittelten Serienwiderstände untereinander und/oder mit dem in bekannten Grenzen veränderlichen Spulenwiderstand kann auf den Zustand der Sensorschaltung und insbesondere auf die Qualität der Zuleitungskontakte und der Steckverbindungen geschlossen werden. Insbesondere sind schnelle Widerstandsänderungen erkennbar, welche nicht durch den temperaturabhängigen Spulenwiderstand verursacht werden können. Bei heutiger Auslegung des Spulenkreises und der Zuleitungen für den Einsatz in einem Kraftfahrzeug beträgt die Messzeit für eine solche Messung, in Abhängigkeit der gewünschten Genauigkeit, ungefähr 20 - 200 ms.

Vorteilhafte Ausführungsbeispiele sind nachstehend anhand der Zeichnung erläutert. Es zeigt:

Fig. 1: Ein Ersatzschaltbild der Messfühlereinheit eines Positionssensors
Fig. 2: Ein Strom-Zeit-Diagramm eines Ausführungsbeispiels des Positionsermittlungsverfahrens

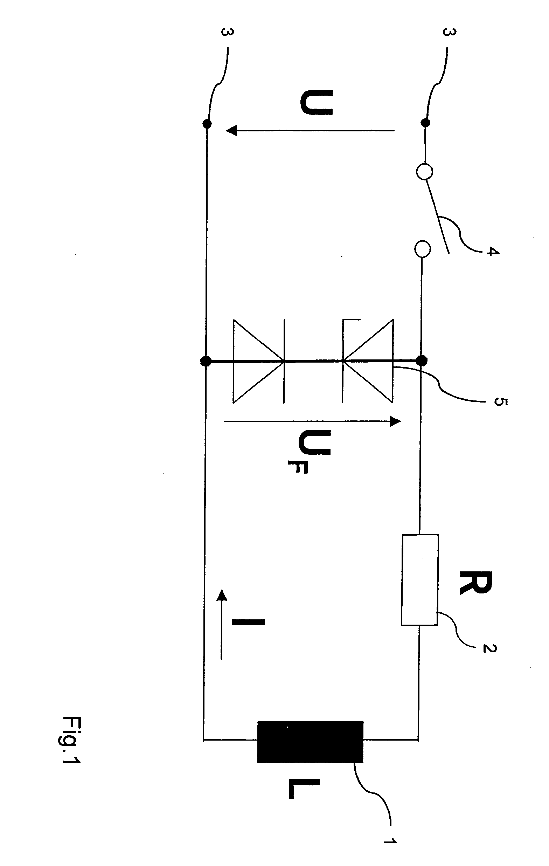

Die Fig. 1 zeigt ein Ersatzschaltbild einer Messfühlereinheit eines Positionssensors, anhand dessen eine vorteilhafte Ausführungsform des erfindungsgemäßen Positionsermittlungsverfahrens beschrieben wird. Die Messfühlereinheit besteht im wesentlichen aus der Spule und dem in der Spule verschiebbaren Kern. Die Spule 1 ist durch die Induktivität L dargestellt. Der Innenwiderstand der Spule 1 plus dem Zuleitungswiderstand ist durch den Serienwiderstand 2 dargestellt. Zwischen den Klemmen 3 liegt eine Spannung U an, welche mittels eines Schalters 4 an die Kombination aus Spule 1 und Serienwiderstand 2 geschaltet wird. Hierdurch wird ein Strom durch die Spule angeregt.

Zum Abbau des Spulenstroms nach dem Öffnen des Schalters 4 ist eine Diodenkombination 5 vorgesehen.

Die Stromstärke durch die Spule 1 soll im Ausgangszeitpunkt $t_0$ vernachlässigbar klein sein. Zwischen den Klemmen 3 liegt eine Spannung $U_1 \neq 0$ an und der Schalter 4 wird geschlossen. Hierdurch beginnt ein zeitlich ansteigender Strom I(t) durch die Spule zu fließen. Die Zeitdauer $t_2 - t_1$ mit $t_1 = t_0 = 0$, innerhalb derer der Strom durch die Spule von einer ersten Stromstärke $I_1 = I_0 = 0$ auf eine zweite Stromstärke $I_2$ ansteigt, wird erfasst. Aus diesem Strom lässt sich die Induktivität der Spule 1 einfach ermitteln, falls der Serienwiderstand 2 bekannt ist:

$$L = \frac{-R * t_2}{\ln\left(1 - \dfrac{I_2 * R}{U_1}\right)} \qquad \text{(Gleichung 1)}$$

Ohne den Serienwiderstand 2 heranzuziehen, wird die Induktivität der Spule 1 erfindungsgemäß dadurch ermittelt, dass ab einem Zeitpunkt $t_3$ der Schalter 4 geöffnet wird, so dass der Spulenstrom über die Diodenkombination 5 abgebaut wird, an welcher die Diodenspannung $U_F$ anliegt. Es wird die Zeitdauer $t_5$ - $t_4$ erfasst, innerhalb derer der Strom durch die Spule von einer Stromstärke $I_3$ auf eine vierte Stromstärke $I_4 = 0$ abfällt. Dieser Stromabfall wird beschrieben durch die Gleichung:

$$L = \frac{R * (t_5 - t_4)}{\ln\left(1 + \dfrac{I_3 * R}{U_F}\right)} \qquad \text{(Gleichung 2)}$$

Mittels den beiden Gleichungen 1 und 2 und den erfassten Größen $I_2$, $I_3$, $U_1$, $t_2$, $t_4$ und $t_5$ werden die Induktivität L der Spule 1 und der Serienwiderstand 2 ermittelt.

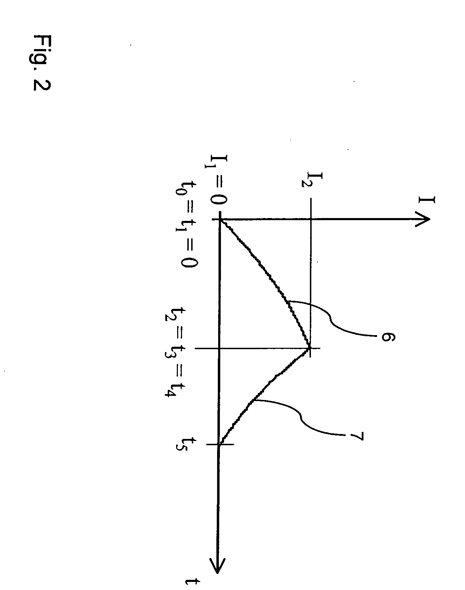

Die Fig. 2 zeigt ein Strom-Zeit-Diagramm eines einfachen und vorteilhaften Ausführungsbeispiels des erfindungsgemäßen Positionsermittlungsverfahrens. An der Spule 1 liegt kurz vor dem Zeitpunkt $t_0 = t_1$ eine Spannung $U_0$ = 0 an. Dann wird im Zeitpunkt $t_0 = t_1$ eine Spannung $U_1 > 0$ an die Spule 1 angelegt, und die Zeitdauer $t_2$ - $t_1$ erfasst, innerhalb derer die Stromstärkekurve 6 durch die Spule 1 von der ersten Stromstärke $I_1 = 0$ auf eine zweite Stromstärke $I_2$ ansteigt. Zu diesem Zeitpunkt $t_2$ (= $t_3 = t_4$) wird an die Spule eine Spannung $U_2 = 0$ angelegt, und es wird die Zeitdauer $t_5$ - $t_4$ erfasst, innerhalb derer die Stromstärkekurve 7 durch die Spule von der Stromstärke $I_2 = I_3$ auf die Stromstärke $I_4 = 0$ abfällt. Die erfassten Zeitdauern $t_2$ - $t_1$ und $t_5$ - $t_4$, sowie die Stromstärken $I_1 = I_4 = 0$ und $I_2 = I_3$ werden zur Ermittlung der Induktivität L der Spule 1 mittels den beiden Gleichungen 1 und 2 herangezogen. Aus der Induktivität der Spule 1 wird beispielsweise mittels einer eindeutigen Zuordnungsvorschrift, beispielsweise einem funktionalen Zusammenhang oder einer Tabelle, auf die Position des verschiebbaren Kerns geschlossen.

Das erfindungsgemäße Verfahren ist prinzipiell mit beliebigen Stromwerten (unterhalb der magnetischen Sättigung der Spule) $I_1$ bis $I_5$, Spannungswerten U und $U_F$ und Zeitwerten $t_1$ bis $t_5$ durchführbar. Eine Wahl dieser Werte entsprechend dem angeführten Ausführungsbeispiel ermöglicht lediglich eine einfacher Durchführung. Insbesondere kann das Verfahren auch mit wechselnden Strom-, Spannungs- und Zeitwerten durchgeführt werden. Hierdurch kann die Induktivität und aus dieser der Weg des Kerns der Spule besonders zuverlässig ermittelt werden.

**Patentansprüche**

1. Positionsermittlungsverfahren für einen induktiven Positionssensor mit einer Spule und einem in dieser Spule verschiebbaren Kern, wobei die Position des verschiebbaren Kerns dadurch ermittelt wird, dass

   - an die Spule in einem Ausgangszeitpunkt $t_0$ eine Spannung $U_1$ angelegt wird,
   - und eine Zeitdauer $t_2$ - $t_1$ erfasst wird, innerhalb derer sich der Strom durch die Spule von einer ersten Stromstärke $I_1$ auf eine zweite Stromstärke $I_2$ ändert, und
   - die erfasste Zeitdauer $t_2$ - $t_1$ und die Stromstärken $I_1$ und $I_2$ zur Ermittlung der Position des verschiebbaren Kerns herangezogen werden,

      wobei $t_2 > t_1 \geq t_0$ ist,
   **dadurch gekennzeichnet, dass**

   - an die Spule in einem Zeitpunkt $t_3$ eine Spannung $U_2 \neq U_1$ angelegt wird,
   - und die Zeitdauer $t_5$ - $t_4$ erfasst wird, innerhalb derer sich der Strom durch die Spule von einer dritten Stromstärke $I_3$ auf eine vierte Stromstärke $I_4$ ändert, und
   - zusätzlich die erfasste Zeitdauer $t_5$ - $t_4$ und die Stromstärken $I_3$ und $I_4$ zur Ermittlung der Position des verschiebbaren Kerns herangezogen werden,

wobei $t_5 > t_4 \geq t_3 \geq t_2$ ist.

2. Positionsermittlungsverfahren nach Anspruch 1
   **dadurch gekennzeichnet, dass**
   aus den erfassten Zeitdauern, Stromstärken und Spannungen eine Induktivität der Spule und aus der Induktivität der Spule die Position des verschiebbaren Kerns ermittelt wird.

3. Positionsermittlungsverfahren nach einem der Ansprüche 1 oder 2
   **dadurch gekennzeichnet, dass**
   die Spannung $U_0$, welche im Ausgangszeitpunkt $t_0$ - 0 an der Spule anliegt, zumindest näherungsweise, gleich 0 V beträgt.

4. Positionsermittlungsverfahren nach einem der Ansprüche 1 bis 3,
   **dadurch gekennzeichnet, dass**
   sich der Betrag der Spannung $U_2$ wesentlich vom dem Betrag der Spannung $U_1$ unterscheidet.

5. Positionsermittlungsverfahren nach einem der Ansprüche 1 bis 4,
   **dadurch gekennzeichnet, dass**
   die Stromstärke $I_1$ und/oder die Stromstärke $I_4$, zumindest näherungsweise, gleich 0 A beträgt.

6. Positionsermittlungsverfahren nach einem der Ansprüche 1 bis 5,
   **dadurch gekennzeichnet, dass**
   die Stromstärken $I_2$ und $I_3$ so gering sind, dass der Anstieg und der Abfall der Stromstärke in den Zeiträumen zwischen $t_1$ und $t_2$ und zwischen $t_4$ und $t_5$ näherungsweise linear sind.

7. Positionsermittlungsverfahren nach einem der Ansprüche 2 bis 6,
   **dadurch gekennzeichnet, dass**
   aus den erfassten Stromwerten, Spannungswerten und Zeiten zusätzlich der Serienwiderstand der Spule und deren Zuleitungen ermittelt wird.

8. Positionsermittlungsverfahren nach Anspruch 7,
   **dadurch gekennzeichnet, dass** zur Plausibilisierung der ermittelten Position des verschiebbaren Kerns und/oder zur Überprüfung des Sensorsystems

   - ein in vorgebbaren Abständen durchführbarer Zwischenschritt vorgesehen wird, bei welchem $t_z \gg t_2$ sehr groß vorgegeben wird, und
   - zum Zeitpunkt $t_z$ die Stromstärke $I_z$ näherungsweise der Sättigungsstromstärke $I_\infty = I$ ($U_0$, t=∞) entspricht, und
   - aus dem Quotient der Spulenspannung $U_0$ und der Stromstärke $I_z$ der Serienwiderstand des Systems aus Spule und Zuleitungen ermittelt wird, und
   - der auf diese Weise ermittelte Serienwiederstand mit dem nach Anspruch 7 ermittelten Serienwiderstands verglichen wird.

Fig.1

U  $U_F$  I  R  L

3  3  4  5  2  1

Fig. 2

**Europäisches Patentamt**

## EUROPÄISCHER RECHERCHENBERICHT

Nummer der Anmeldung

EP 03 01 1705

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 204 659 B1 (YAMAMOTO MASAHIRO) 20. März 2001 (2001-03-20) <br> * Spalte 1, Zeile 4 - Zeile 11 * <br> * Spalte 4, Zeile 6 - Zeile 12 * <br> * Spalte 6, Zeile 25 - Spalte 8, Zeile 42 * <br> * Spalte 9, Zeile 23 - Zeile 28 * <br> * Abbildungen 1,2A,5A * | 1-5,7 | G01D5/20 |
| Y | | 6 | |
| D,Y | WO 00 71977 A (VOLVO LASTVAGNAR AB ;MAX ERLAND (SE)) 30. November 2000 (2000-11-30) <br> * Seite 9, Zeile 1 - Zeile 12 * | 6 | |
| A | DE 44 43 259 A (VAILLANT JOH GMBH & CO) 1. Juni 1995 (1995-06-01) <br> * Spalte 1, Zeile 11 - Zeile 33 * <br> * Spalte 7, Zeile 23 - Zeile 44; Abbildung 8 * | 1 | |

| RECHERCHIERTE SACHGEBIETE (Int.Cl.7) |
|---|
| G01D <br> G01R <br> H03K |

Der vorliegende Recherchenbericht wurde für alle Patentansprüche erstellt

| Recherchenort | Abschlußdatum der Recherche | Prüfer |
|---|---|---|
| DEN HAAG | 5. Dezember 2003 | Keita, M |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 01 1705

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 6204659 | B1 | 20-03-2001 | JP | 2000009409 A | 14-01-2000 |
| | | | DE | 19858147 A1 | 30-12-1999 |
| WO 0071977 | A | 30-11-2000 | SE | 520176 C2 | 03-06-2003 |
| | | | BR | 0010876 A | 19-02-2002 |
| | | | EP | 1196742 A1 | 17-04-2002 |
| | | | WO | 0071977 A1 | 30-11-2000 |
| | | | SE | 9901876 A | 01-02-2001 |
| | | | US | 6541961 B1 | 01-04-2003 |
| DE 4443259 | A | 01-06-1995 | DE | 4443259 A1 | 01-06-1995 |

EPO FORM P0461

Für nähere Einzelheiten zu diesem Anhang : siehe Amtsblatt des Europäischen Patentamts, Nr.12/82